# NEUE EUROPÄISCHE PATENTSCHRIFT

(11) **EP 0 446 465 B2**
(45) Veröffentlichungstag und Bekanntmachung des Hinweises auf die Entscheidung über den Einspruch: **25.09.1996**
(45) Hinweis auf die Patenterteilung: 02.03.1994
(21) Anmeldenummer: 90124514.2
(22) Anmeldetag: 18.12.1990
(51) Int. Cl.: A23L 2/78, B01J 39/04

(54) **Verfahren zum Entfärben und Entsalzen von Fruchtsaft und- most**
Process for the decolourizing and desalting fruit juice and must
Procédé pour décolorer et dessaler le jus ou moût de fruits

(30) Priorität: 22.02.1990 DE 4005579
(43) Veröffentlichungstag der Anmeldung: 18.09.1991
(73) Patentinhaber: BAYER AG, 51368 Leverkusen (DE)
(72) Erfinder: Siegers, Günter, W-5060 Bergisch Gladbach 2 (DE)

(56) Entgegenhaltungen:
- EP-A- 0 339 540
- DE-B- 2 257 864
- FR-A- 2 210 358
- US-A- 2 667 417
- US-A- 3 801 717
- Recovery of sugar from beet molasses by the P & L exclusion process, International Sugar Journal, 1975, 77, 259-264, 294-298
- Some technical and economic aspects of the chromatographic separation of sugar solutions, British Sugar Corporation Limited, 23rd Technical Conference, Eastbourne, Jue 1976, Paper D, H. Hongisto
- Proceedings of the Research Society of Japan Sugar Refinerie's Technologist's, Vol. 22 (1970), Yushi Ito
- Ion exclusion, an overlooked ally, The Sugar Journal, February 1972, pp. 7-10, James F. Zievers et al

## Beschreibung

Die Erfindung betrifft ein neues Verfahren zum Entsalzen und Entfärben von Fruchtsaft und -most.

Die großtechnische Gewinnung von Zuckern aus Fruchtsäften, insbesondere aus Traubensaft und -most gewinnt zunehmend an Bedeutung. In Abhängigkeit von den klimatischen Bedingungen in den verschiedenen Anbaugebieten enthalten z.B. Traubensaft bzw. -most 17 bis 20 Gew.-% Zucker, 0,6 Gew.-% Eiweiß, etwa 0,3 Gew.-% Fette und etwa 130 meq Salze/l. Außerdem weisen die Fruchtsäfte bzw. -moste einen mehr oder weniger großen Gehalt an Farbstoffen, vorwiegend Anthocyanen, auf.

Zur Gewinnung der Zucker aus Fruchtsäften, z.B. Birnensaft und Traubensaft bzw. -most müssen diese entfärbt und entsalzt werden. Bislang werden die Säfte bzw. Moste durch Ionenaustausch, d.h. durch Behandeln mit starksauren, in der H⁺-Form vorliegenden Kationenaustauschern und in der Amin-Form vorliegenden schwachbasischen Anionenaustauschern entsalzt. Bei der Entsalzung, genauer beim Durchfließen der schwachbasischen Anionenaustauscher tritt gleichzeitig mit der Absorption der Säuren eine Entfärbung ein.

Dieses Entsalzen und Entfärben durch Ionenaustausch hat den Nachteil, daß die Farbstoffe auf die schwachbasischen Anionenaustauschern nahezu irreversibel aufziehen und deshalb beim Regenerieren mit Natronlauge nur zu einem kleinen Teil entfernt werden und deshalb die austauschaktiven Gruppen des Anionenaustauschers blockieren. D.h. die nutzbare Kapazität der in diesem Verfahren eingesetzten schwachbasischen Anionenaustauscher nimmt bereits nach wenigen Arbeitszyklen stark ab; außerdem verschlechtert sich das Auswaschverhalten der Anionenaustauscher.

Zum Schutz der schwachbasischen Anionenaustauscher wurden den Entsalzungsfiltern aus stark sauren Kationenaustauschern und schwachbasischen Anionenaustauschern bereits mit speziellen starkbasischen Entfärbungsharzen gefüllte Filter vorgeschaltet. Aber auch diese Entfärbungsharze waren bereits nach wenigen Arbeitszyklen so stark durch die Farbstoffe desaktiviert, daß sie durch ein aufwendiges Behandeln mit Oxidationsmitteln gereinigt werden mußten.

D.h. die bekannten Verfahren zum Entfärben und Entsalzen von Fruchtsäften, insbesondere von Traubensaft und -most durch Ionenaustausch haben den Nachteil, daß die Standzeiten der Anionenaustauscher zu kurz sind und/oder das sie aufwendige Verfahren zur Reinigung der Anionenaustauscher erfordern.

Aus der FR-A-2 210 958 ist ein Verfahren zur Stabilisierung von Traubensaft bekannt, wonach man insbesondere die Calcium- und Kaliumionen mit Hilfe eines Ionenaustauschers durch andere Ionen, insbesondere Natrium- und Magnesiumionen, ersetzt. Die EP-A-339 540 empfiehlt den Austausch der in Fruchtsäften enthaltenen Kaliumionen gegen Calciumionen mit Hilfe eines Kationenaustauschers. Eine Trennung eines Stoffes in Elektrolyt - und Nichtelektrolyt wird durch die genannten Druckschriften weder vorbeschrieben noch nahegelegt.

Überraschenderweise wurde gefunden, daß sich Entfärben und Entsalzen von Fruchtsäften, wie Birnensaft und Traubensaft und -most mühelos und ohne Verbrauch an Ionenaustauschern erreichen lassen, wenn man den Saft bzw. Most an beladenen Kationenaustauschern chromatographiert. Überraschenderweise wurde gefunden, daß die Farbstoffe bei der Chromatographie der Säfte an starksauren beladenen Kationenaustauschern nicht im Ionenaustauscher festgehalten werden, sondern praktisch quantitativ mit den Salzen in den Elektrolyt-Vorlauf wandern. Im Gegensatz zur Auftrennung von Melasse nach dem Elektrolyt-Vorlauf-Verfahren in Zucker und Nicht-Zucker, bei der nur eine unvollständige Abtrennung der Farbstoffe vom Zucker erreicht wird, wird bei der Anwendung des Verfahrens auf die Trennung von Zuckern und Nicht-Zuckern (Salzen) in Fruchtsäften eine fast quantitative Trennung der Farbstoffe von den Zuckern erreicht.

Die Erfindung betrifft daher ein Verfahren zum Entsalzen und Entfärben von Fruchtsäften, insbesondere von Birnensaft und Traubensaft und -most mit Hilfe von Ionenaustauschern; das Verfahren ist dadurch gekennzeichnet, daß man die Fruchtsäfte (-moste) an starksauren, in der Salzform vorliegenden Kationenaustauschern chromatographiert.

Chromatographieren heißt, den beladenen, d.h. den in der Salzform vorliegenden, Kationenaustauscher mit konstanter Strömungsgeschwindigkeit (Strömungsrichtung: von oben nach unten) mit einer bestimmten, zuvor durch Vorversuche ermittelten Menge an Fruchtsaft (-most) zu beaufschlagen (zu beladen) und anschließend den beaufschlagten Kationenaustauscher durch Einleiten von entsalztem Wasser, ebenfalls mit konstanter Strömungsgeschwindigkeit und Strömungsrichtung von oben nach unten, zu eluieren.

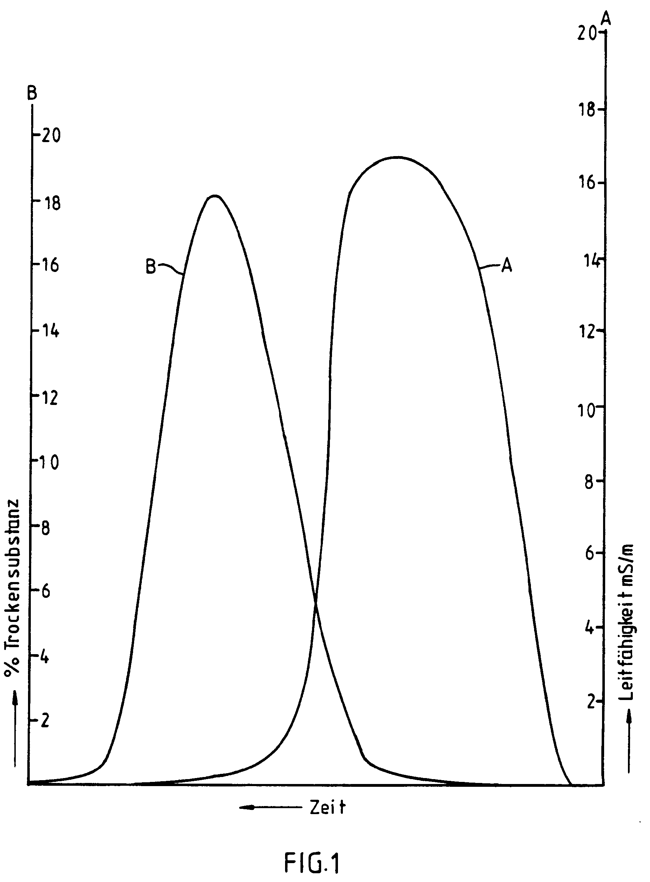

Durch gleichzeitiges Bestimmen von elektrischer Leitfähigkeit und Brechungsindex (→ umgerechnet in Gewichtsprozent Trockensubstanz) im Eluat (Ablauf) wird festgestellt, wann der Elektrolyt-Vorlauf im Eluat erscheint (die Leitfähigkeitswerte im Eluat steigen an), wann er aus der Kolonne ausgewaschen ist (Leitfähigkeitswerte sinken wieder gegen Null, der Brechungsindex (Gehalt an Trockensubstanz in Gewichtsprozent) steigt an) und wann die Zuckerfraktion im Ablauf erscheint (Leitfähigkeit des Eluates sinkt gegen Null, der Brechungsindexes (Gehalt an Trockensubstanz) steigt an) (siehe Fig. 1, 2 und 3).

Sobald der Wert des Brechungsindexes des Eluates wieder auf Null abgesunken ist, d.h. auch die Zuckerfraktion abgelaufen ist, beginnt das Arbeitsspiel erneut mit dem Beaufschlagen des Kationenaustauschers mit Fruchtsaft (-most).

Üblicherweise wird der Fraktionswechsel im Eluat im Schnittpunkt der Elutionskurve des Elektrolyten (in den Fig. 1, 2 und 3 Kurve A) mit der Elutionskurve des Nichtelektrolyten (in den Fig. 1, 2 und 3 Kurve B) vorgenommen. Je nach Anforderung an das Reinprodukt, kann man jedoch den Zeitpunkt, an dem der Fraktionswechsel vorgenommen wird, auch vom Schnittpunkt von Elektrolyt- und Nichtelektrolyt-Kurve weg in den Elektrolyt- oder Nichtelektrolyt-Bereich verlegen.

In den Vorversuchen zur Ermittlung der auf den Kationenaustauscher aufzubringenden Fruchtsaft-Menge wird die Kapazität des verwendeten Kationenaustauschers (in g Trockensubstanz/l Harz) für die aus dem Fruchtsaftaufzunehmende Zuckermenge ermittelt. Im erfindungsgemäßen Verfahren werden die starksauren Kationenaustauscher mit einer solchen Fruchtsaftmenge versetzt, daß auf 1 l Kationenaustauscher 30 bis 100 g, vorzugsweise 30 bis 80 g der im Saft enthaltenen Trockensubstanz entfallen. Der Entsalzungs- und Entfärbungsgrad sind vom Verhältnis Kationenaustauscher/Menge an aufgebrachter Trockensubstanz in dem Sinne abhängig, daß mit zunehmendem Beladungsgrad (Menge an Trockensubstanz je Liter Harz und Zyklus) Entsalzungs- und Entfärbungsgrad abnehmen. Aus Gründen der Wirtschaftlichkeit gibt man sich im allgemeinen mit Entsalzungs- und Entfärbungsgraden von 90 bis 95 % zufrieden.

Das Chromatographieren, d.h. Beladen und Elution, wird zur Beschleunigung der Gleichgewichtseinstellung vorzugsweise bei erhöhten Temperaturen, z.B. bei 40 bis 90°C, besonders bevorzugt 50 bis 80°C vorgenommen.

Als starksaure Kationenaustauscher werden vorzugsweise schwachvernetzte gelförmige Kationenaustauscher auf Basis von Polystyrolsulfonsäure, z.B. mit 2 bis 12 Gew.-%, vorzugsweise mit 4 bis 8 Gew.-% Divinylbenzol vernetzte Polystyrolsulfonsäuren verwendet.

Für das erfindungsgemäße Verfahren können die stark sauren Kationenaustauscher in der Na⁺-, K⁺- oder Ca²⁺-Form verwendet werden. Da die Fruchtsäfte (-moste) überwiegend Kaliumsalze enthalten (z.B. Kaliumtartrat), empfiehlt sich die Verwendung eines mit K⁺-beladenen Kationenaustauschers. Auf diese Weise wird eine Umladung des Kationenaustauschers während der Chromatographie vermieden und eine Regeneration gespart. Um eine Umladung des in der K⁺-Form vorliegenden Kationenaustauschers durch die in geringen Mengen im Saftenthaltenen Mg²⁺- und Ca²⁺-Ionen zu vermeiden, empfiehlt es sich, dem Chromatographiefilter einen mit K⁺-Ionen beladenen Kationenaustauscher zur Umsalzung des Saftes vorzuschalten.

Der Gehalt an Trockensubstanz der erfindungsgemäß entsalz- und entfärbbaren Fruchtsäfte und -moste kann zwischen 10 und 70 Gew.-%, vorzugsweise zwischen 10 und 50 Gew.-% liegen.

Das erfindungsgemäße Verfahren hat außer dem Vorteil, daß es nur mit einem Kationenaustauscher arbeitet und keinen Anionenaustauschererfordert, den weiteren Vorteil, daß der Kationenaustauscher keiner Regeneration bedarf und daß deshalb bei ihm, im Gegensatz zur Entsalzung durch Ionenaustausch, keine Belastung des Abwassers mit Regenerierchemikalien eintritt.

### Beispiel 1

Ein Ionenaustauscher-Filter (am unteren Ende mit einer flüssigkeitsdurchlässigen Platte verschlossenes Glasrohr, innerer Durchmesser des Glasrohres: 25 mm, Höhe des Glasrohres: 950 mm) wird mit 440 ml eines starksauren gelförmigen Kationenaustauschers (mit 4 Gew.-% Divinylbenzol vernetzte Polystyrolsulfonsäure) in der K⁺-Form gefüllt (Füllhöhe: 893 mm) und mit 95,8 ml eines aus Rose-Trauben hergestellten Mostes (Mosttemperatur: 60°C) mit einer linearen Strömungsgeschwindigkeit von 1 m/h (Strömungsrichtung: von oben nach unten) beaufschlagt (Gehalt des Mostes an Trockensubstanz (TS): 21,1 Gew.-%; Beladungsgrad: 50 g Trockensubstanz/l Kationenaustauscher). Anschließend wird der Kationenaustauscher mit entsalztem Wasser (Wassertemperatur 70°C) mit einer linearen Strömungsgeschwindigkeit von ebenfalls 1 m/h beaufschlagt. Die Zusammensetzung des aus der Säule abfließenden Eluates wird anhand seiner elektrischen Leitfähigkeit und seines Brechungsindex (= Trockensubstanz-Gehaltes) überwacht; im Zeitpunkt, an dem sich die Leitfähigkeits-Kurve A mit der Trockensubstanz-Kurve B schneidet wird die Eluat-Fraktion gewechselt.

Die auf diese Weise erhaltenen zwei Fraktionen werden anschließend auf ihren Gehalt an Trockensubstanz, Salz und Farbe untersucht.

In der nachstehenden Tabelle sind die bei der Untersuchung gefundenen Werte den entsprechenden Werten des Rohsaftes gegenübergestellt.

**Tabelle 1**

| | Rohsaft | Elektrolyt-Fraktion | Nichtelektrolyt-Fraktion |
|---|---|---|---|
| pH-Wert | 7,31 | 7,13 | 8,36 |
| Leitfähigkeit µS/cm | | 7776 | 225 |
| K_{S} 4,3 mmol/l | 40,75 | 25,84 | 1,73 |
| K_{S} 8,2 mmol/l | - | - | 0,1 |
| K_{B} 8,2 mmol/l | 7,54 | 4,92 | - |
| GH (1/2Ca²⁺+1/2Mg²⁺) mmol/l | 0 | 0 | 0 |
| starke Anionen mmol/l | 87,02 | 65,3 | 1,2 |
| Gesamtsalz mmol/l | 127,77 | 91,14 | 2,93 |
| Farbe, Ext./cm, 420 nm | 1,196 | 0,729 | 0,031 |
| Saft: Konzentration, % TS | 21,1 | 2,5 | 12,5 |
| Menge/Zyklus, g TS absolut | 22,0 | 3,7 | 18,36 |
| Elektrolyt, g absolut | | 1,3 | |
| Nichtelektrolyt, g absolut | | 2,4 | |
| ml/Zyklus absolut | 95,8 | 146 | 146 |
| TS = Trockensubstanz GH = Gesamthärte | | | |

Aus dem Vergleich derangegebenen Werte für Rohsaft und Nichtelektrolyt-Fraktion (Zuckerfraktion) ergibt sich für die Nichtelektrolyt-Fraktion ein Entsalzungsgrad von 97,7 % und ein Entfärbungsgrad von 97,4 %. Die Konzentration der Nichtelektrolyt-Fraktion ist durch die Chromatographie von 21,1 % TS auf 12,5 % gesunken. Die aufden Kationenaustauscher aufgebrachte Stoffmenge (Trockensubstanz) verteilt sich wie folgt: 3,7 g werden in der Elektrolytfraktion und 18,36 g in der Nichtelektrolyt-Fraktion gefunden. Die in der Elektrolyt-Fraktion enthaltenen 3,7 g Trockensubstanz setzen sich zusammen aus 1,3 g Elektrolyt und 2,4 g Nichtelektrolyt.

Anschließend an die Elution mit Wasser wird der Kationenaustauscher erneut wie beschrieben mit 95,8 ml Most beaufschlagt und das Arbeitsspiel wie beschrieben wiederholt. Auch bei diesem Arbeitspiel werden eine Elektrolyt-Fraktion und eine Nichtelektrolyt-Fraktion erhalten, deren Zusammensetzung der in Tabelle 1 angegebenen Zusammensetzung entspricht.

Das Arbeitsspiel wurde insgesamt 100 mal wiederholt, ohne daß eine Veränderung in der Zusammensetzung der erhaltenen Fraktionen zu beobachten war.

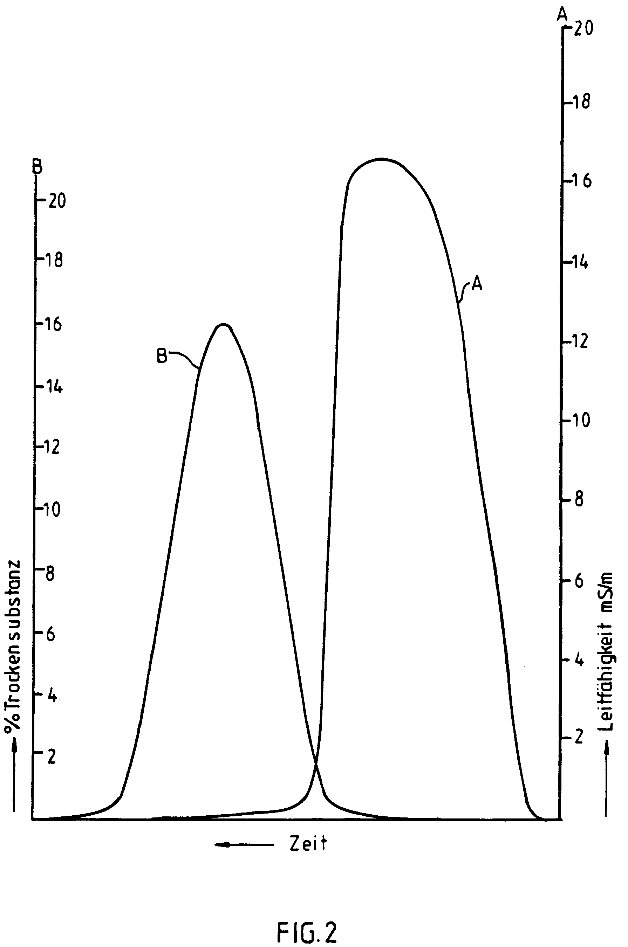

In einem weiteren Versuch wurde der Kationenaustauscher nur mit 77 ml Most, d.h. mit 40 g Trockensubstanz/l Kationenaustauscher beaufschlagt. Die Chromatographie wurde unter den vorstehend beschriebenen Bedingungen (Temperatur, Strömungsgeschwindigkeiten usw.) vorgenommen. Auch der Wechsel der Eluatfraktion wurde im Schnittpunkt von Elektrolyt- und Nichtelektrolyt-Kurve vorgenommen (siehe Fig. 2).

In der nachstehenden Tabelle 2 sind die bei der Untersuchung dererhaltenen Elektrolyt-Fraktion und Nichtelektrolyt-Fraktion gefundenen Werte den entsprechenden Werten des aufgegebenen Mostes gegenübergestellt.

Aus dem Vergleich derangegebenen Werte für Rohsaft und Nichtelektrolyt-Fraktion (Zuckerfraktion) ergibt sich für die Nichtelektrolyt-Fraktion ein Entsalzungsgrad von 99,5 % und ein Entfärbungsgrad von 98,8 %. Die Konzentration der Nichtelektrolyt-Fraktion sinkt durch die Chromatographie von 21,1 % TS auf 10,6%. Die auf den Kationenaustauscher aufgebrachte Stoffmenge (Trockensubstanz) verteilt sich wie folgt: 2,56 g werden in der Elektrolytfraktion und 15,03 g in der Nichtelektrolyt-Fraktion gefunden. Die in der Elektrolyt-Fraktion enthaltenen 2,56 g Trockensubstanz setzen sich zusammen aus 1,05 g Elektrolyt und 1,52 g Nichtelektrolyt.

**Tabelle 2**

| | Rohsaft | Elektrolyt-Fraktion | Nichtelektrolyt-Fraktion |
|---|---|---|---|
| pH-Wert | 7,31 | 7,06 | 8,5 |
| Leitfähigkeit µS/cm | | 6975 | 99,5 |
| K_{S} 4.3 mmol/l | 40,75 | 18,93 | 0,215 |
| K_{S} 8,2 mmol/l | - | - | 0,03 |
| K_{B} 8,2 mmol/l | 7,54 | 2,33 | 0 |
| GH (1/2Ca²⁺+1/2Mg²⁺) mmol/l | 0 | 0 | 0 |
| starke Anionen mmol/l | 87,02 | 61,5 | 0,42 |
| Gesamtsalz mmol/l | 127,77 | 80,43 | 0,635 |
| Farbe, Ext./cm, 420 nm | 1,196 | 0,711 | 0,015 |
| Saft: Konzentration, % TS | 21,1 | 1,2 | 10,6 |
| Menge/Zyklus, g TS absolut | 17,6 | 2,56 | 15,03 |
| Elektrolyt, g absolut | - | 1,05 | |
| Nichtelektrolyt, g absolut | - | 1,52 | |
| ml/Zyklus absolut | 77 | 130 | 138 |
| TS = Trockensubstanz GH = Gesamthärte | | | |

### Beispiel 2

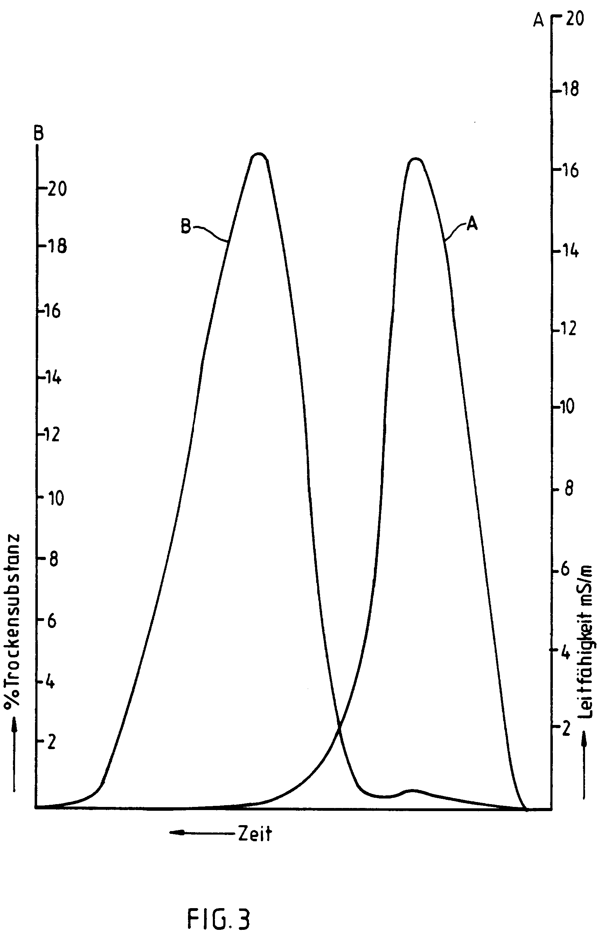

Das in Beispiel 1 beschriebene Ionenaustausch-Filter wird mit 440 ml eines starksauren gelförmigen Kationenaustauschers (mit 6 Gew.-% Divinylbenzol vernetzte Polystyrolsulfonsäure) in der K⁺-Form gefüllt und mit 44 ml eines Birnensaftkonzentrates (Gehalt an Trockensubstanz: 50 %) bei einer Temperatur von 60°C mit einer linearen Strömungsgeschwindigkeit von 1 m/h (Strömungsrichtung: von oben nach unten) beaufschlagt. Anschließend wird der Kationenaustauscher mit entsalztem Wasser (Wassertemperatur: 60°C) mit einer linearen Strömungsgeschwindigkeit von ebenfalls 1 m/h (Strömungsrichtung: von oben nach unten) beaufschlagt. Die Zusammensetzung des aus der Säule abfließenden Eluates wird anhand seiner elektrischen Leitfähigkeit und seines Brechungsindex (= Trockensubstanz-Gehaltes) überwacht. Die Eluatfraktion wird im Zeitpunkt gewechselt, an dem sich die Leitfähigkeits-Kurve A mit der Trockensubstanz-Kurve B schneidet (siehe Fig. 3). Die so erhaltenen zwei Fraktionen werden anschließend auf ihren Gehalt an Salz, Trockensubstanz und Farbe untersucht (siehe Tabelle 3).

Aus dem Vergleich derangegebenen Wertefür Rohsaft und Nichtelektrolyt-Fraktion (Zuckerfraktion) ergibt sich für die Nichtelektrolyt-Fraktion ein Entsalzungsgrad von 96,4 % und ein Entfärbungsgrad von 98,5 %.

**Tabelle 3**

| | Rohsaft | Elektrolyt-Fraktion | Nichtelektrolyt-Fraktion |
|---|---|---|---|
| pH-Wert | 5,11 | 5,43 | 6,72 |
| Leitfähigkeit µS/cm | 15344 | 10803 | 308 |
| K_{S} 4,3 mmol/l | 146,7 | 48,1 | 1,42 |
| K_{S} 8,2 mmol/l | - | - | - |
| K_{B} 8,2 mmol/l | 79,2 | 25,4 | 1,6 |
| GH (1/2Ca²⁺+1/2Mg²⁺) mmol/l | 22,5 | 0 | 0 |
| starke Anionen mmol/l | 283,14 | 108 | 4,6 |
| Gesamtsalz mmol/l | 429,8 | 156 | 6,02 |
| Farbe, Ext./cm, 420 nm | 2,72 | 0,544 | 0,04 |
| Saft: Konzentration, % TS | 50 | 2,90 | 12,9 |
| Menge/Zyklus, g TS absolut | 22 | 3,20 | 18,71 |
| Elektrolyt, g absolut | 1,4 | 1,20 | 0,05 |
| Nichtelektrolyt, g absolut | 20,6 | 2,0 | |
| ml/Zyklus absolut | 35,62 | 110 | 145 |
| TS = Trockensubstanz GH = Gesamthärte | | | |

## Patentansprüche

1. Verfahren zum Entsalzen und Entfärben von Fruchtsaft und -most mit Entsalzungs- und Entfärbungsgraden von mindestens 90 % mit Hilfe von Ionenaustauschern durch Chromatographie des Fruchtsafts (-mosts) an stark sauren, in der Salzform vorliegenden Kationenaustauschern.

2. Verfahren nach Anspruch 1, dadurch gekennzeichnet, daß man in der Na⁺-, K⁺- oder Ca²⁺-Form vorliegende starksaure Kationenaustauscher verwendet.

3. Verfahren nach Anspruch 1 oder 2, dadurch gekennzeichnet, daß man als starksaure Kationenaustauscher gelförmige, mit 2 bis 12 Gew.-% Divinylbenzol vernetzte Polystyrolsulfonsäuren verwendet.

4. Verfahren nach einem der Ansprüche 1, 2 oder 3, dadurch gekennzeichnet, daß man den in der Salzform vorliegenden starksauren Kationenaustauscher mit einer solchen Menge Fruchtsaft- oder -most beaufschlagt, daß auf 1 l Kationenaustauscher 30 bis 100 g Trockensubstanz des Saftes (Mostes) entfallen.

5. Verfahren nach einem der Ansprüche 1, 2, 3 oder 4, dadurch gekennzeichnet, daß man das Chromatographieren bei erhöhten Temperaturen vornimmt.

## Claims

1. Process for demineralizing and decolorizing fruit juice and must with degrees of demineralization and decolorization of at least 90% with the aid of ion exchangers by chromatography of the fruit juice (must) on strongly acid cation exchangers in the salt form.

2. Process according to Claim 1, characterized in that strongly acid cation exchangers in the Na⁺, K⁺ or Ca²⁺ form are used.

3. Process according to Claim 1 or 2, characterized in that gelatinous polystyrenesulphonic acids crosslinked with 2 to 12% by weight of divinylbenzene are used as the strongly acid cation exchangers.

4. Process according to one of Claims 1, 2 or 3, characterized in that the strongly acid cation exchanger in the salt form is loaded with an amount of fruit juice or must such that 30 to 100 g of dry substance of the juice (must) are present per 1 l of cation exchanger.

5. Process according to one of Claims 1, 2, 3 or 4, characterized in that the chromatography is carried out at elevated temperatures.

## Revendications

1. Procédé pour éliminer les sels et les matières colorantes d'un jus et d'un moût de fruits avec des degrés d'élimination des sels et des matières colorantes d'au moins 90 % à l'aide d'échangeurs ioniques, caractérisé par la chromatographie du jus (moût) de fruits sur des échangeurs cationiques fortement acides, se présentant sous forme de sels.

2. Procédé suivant la revendication 1, caractérisé en ce qu'on utilise des échangeurs cationiques fortement acides se présentant sous la forme Na⁺, K⁺ ou Ca²⁺.

3. Procédé suivant la revendication 1 ou 2, caractérisé en ce qu'on utilise comme échangeurs cationiques fortement acides, des acides polystyrène-sulfoniques sous forme de gel, réticulés avec 2 à 12 % en poids de divinyl-benzène.

4. Procédé suivant l'une des revendications 1, 2 ou 3, caractérisé en ce qu'on fait arriver sur l'échangeur cationique fortement acide se présentant sous forme de sel une quantité de jus ou de moût de fruits telle qu'il y ait, par litre d'échangeur cationique, 30 à 100 grammes de matière sèche du jus (moût).

5. Procédé suivant l'une des revendications 1, 2, 3 ou 4, caractérisé en ce qu'on conduit la chromatographie à des températures élevées.
